# EUROPÄISCHE PATENTSCHRIFT

(11) **EP 1 396 670 B1**
(45) Veröffentlichungstag und Bekanntmachung des Hinweises auf die Patenterteilung: **29.12.2004**
(21) Anmeldenummer: 02020052.3
(22) Anmeldetag: 06.09.2002
(51) Int. Cl.: F16L 11/08, C08K 5/00

(54) **Schlauch**
Hose
Tuyau flexible

(43) Veröffentlichungstag der Anmeldung: 10.03.2004
(73) Patentinhaber: ContiTech Schlauch GmbH, 30165 Hannover (DE)
(72) Erfinder: Denger, Christoph, Dr., 29482 Küsten (DE); Brettschneider, Ulrich, Dr., 37529 Osterode (DE); Baumung, Jürgen, 37191 Katlenburg-Lindau (DE)
(74) Vertreter: Finger, Karsten

(56) Entgegenhaltungen:
- EP-A- 0 211 431
- US-A- 5 356 681
- US-B1- 6 340 511

## Beschreibung

Die Erfindung betrifft einen Schlauch, insbesondere einen Ladeluftschlauch, der zumindest eine Fluorelastomer-Innenschicht (FKM-Innenschicht), eine darauf aufgebaute peroxidisch vernetzte Silikonelastomer-Schicht, eine Verstärkungslage mit Festigkeitsträgern und eine Elastomer-Außenschicht aufweist.

Immer häufiger werden Motorleistungen im Kraftfahrzeug durch Vorverdichter unterstützt, die die Einleitung von komprimierter Ladeluft in den Verbrennungsraum ermöglichen. Ladeluft wird komprimiert, mit einem Ladeluftkühler abgekühlt und anschließend in den Verbrennungsraum geleitet. Die Führung der Ladeluft zwischen den einzelnen Aggregaten innerhalb des Motors erfolgt über Schlauchleitungen. Die für die Schlauchleitungen verwendeten Schläuche müssen hohen Druckbeaufschlagungen und dynamischen Belastungen, insbesondere extremen Schwingbelastungen, bei hohen Temperaturen (> 200 °C) standhalten. Ferner wird einen hohe Ölbeständigkeit, eine gute Haftung der Lagen des gesamten Verbundes im Schlauch und eine hohe Lebensdauer gefordert. Je nach Einbaubedingungen und den Auslegungen des Ladesystems werden unterschiedliche Schlauchkonstruktionen unter Verwendung verschiedener Kautschuktypen eingesetzt. So werden beispielsweise Ladeluftschläuche mit einer Fluorelastomer-Innenschicht, einer darauf aufgebauten peroxidisch vernetzten Silikonelastomer-Schicht, einer Verstärkungslage mit Festigkeitsträgern und einer Silikonelastomer-Außenschicht für aufgeladene Motoren eingesetzt, die besonders hohen Betriebstemperaturen standhalten müssen. Die Fluorelastomer-Innenschicht dient dabei als Sperrschicht mit geringer Permeationsrate und hoher Wärmebeständigkeit. Die Fluorelastomer-Innenschicht basiert auf peroxidisch vernetztem Fluorkautschuk; auf diese Weise wird eine gute Anbindung (Haftung) an die aufliegenden Silikonelastomer-Zwischenschicht und damit eine gute Haltbarkeit gewährleistet. Peroxidisch vernetzte Fluorkautschukmischungen weisen allerdings die Nachteile auf, dass sie sehr hohen dynamischem Druckbeanspruchungen nicht immer standhalten und dass sie teurer sind und sich schlechter verarbeiten lassen als Fluorkautschukmischungen, die bisphenolisch vernetzt werden. Bisphenolisch vernetzter Fluorkautschuk wird für die Innenschicht in der Regel nicht verwendet, da bei solchen Mischungen die Anbindung zur Silikonelastomer-Schicht nicht ausreichend ist oder fehlt und daher die Schläuche nach kurzer Zeit wegen Lagentrennungen ausfallen können. Bei der Verstärkungslage aus Festigkeitsträgem handelt es sich üblicherweise um Gewebe oder Gestricke aus textilen Garnen, wie z. B. aus Meta- oder Para-Aramiden oder anderen Garnen, die über eine ausreichend hohe Festigkeit und Temperaturbeständigkeit verfügen.

In der US 6,340,511 sind Kraftstoffschläuche offenbart, die eine Innenschicht aus einer Fluorkautschukmischung und eine Außenschicht aus einem Verschnitt aus Acrylnitril-Butadien-Kautschuk (NBR) und Polyvinylchlorid (PVC) aufweisen. Die Schichten des Schlauches sollen gut aneinander haften und die Schläuche sollen eine gute Öl- und Wetterbeständigkeit zeigen. Die Fluorkautschukmischung der Innenschicht enthält einen einzigen Fluorkautschuk und sowohl ein Peroxid als auch eine aromatische Polyhydroxyverbindung, wie z. B. Bisphenol A oder AF, zur Vernetzung. Die alleinige Verwendung von Peroxid führt bei Schläuchen mit einer angrenzenden NBR/PVC-Schicht zu einer relativ schlechten Haftung. Zur Verbesserung der Haftung zwischen den beiden Schichten kann der NBR/PVC-Schicht ein Epoxidharz zugesetzt werden. Schläuche mit einem solchen Aufbau sind für einen Einsatz, bei dem sie hohen dynamischen Druckbeanspruchungen bei hohen Temperaturen ausgesetzt sind, wie z. B. bei einem Einsatz als Ladeluftschläuche, nicht geeignet. NBR/PVC-Verschnitte sind nur für Temperaturen bis ca. 100 °C geeignet, für Temperaturen > 200 °C kommen solche Verschnitte nicht in Frage.

Aus der EP-A-0 211 431 sind covulkanisierbare Fluorkautschukmischungen bekannt, die eine höhere Prozesssicherheit, eine höhere thermische und chemische Stabilität und bessere mechanische Eigenschaften der Vulkanisate gewährleisten sollen. Die Mischungen können für flexible Schläuche verwendet werden und beinhalten 55 bis 100 Gew.-% eines elastomeren Copolymers (Bromgehalt des Copolymers: 0,001 - 2Gew.-%) aus Vinylidenfluorid (Vinylfluorid) mit Hexafluoropropylen und gegebenenfalls Tetrafluorethylen, 0 bis 45 Gew.-% eines Copolymers aus Tetrafluorethylen und Propylen sowie als Vernetzungssubstanzen eine bisphenolische Verbindung, z. B. Bisphenol AF, und gleichzeitig ein organisches Peroxid. Copolymere aus Tetrafluorethylen und Propylen sind in der Regel teuer und schwer verarbeitbar, nur begrenzt beständig gegen Kraftstoff, für tiefe Temperaturen nicht besonders geeignet und weisen eine nicht so gute Alterungsbeständigkeit auf. Schläuche mit dem eingangs genannten Aufbau aus einer Fluorelastomer-Innenschicht, einer darauf aufgebauten peroxidisch vernetzten Silikonelastomer-Schicht, einer Verstärkungslage mit Festigkeitsträgem und einer Elastomer-Außenschicht für hohe dynamische Druckbeanspruchungen bei hohen Temperaturen, insbesondere Ladeluftschläuche, und das Problem der Haftung zu Silikonkautschuk werden in der EP-A-0 211 431 nicht erwähnt.

Der vorliegenden Erfindung liegt nun die Aufgabe zu Grunde, einen Schlauch, insbesondere einen Ladeluftschlauch, bereitzustellen, der hohen dynamischen Belastungen, speziell extremer Schwingungsbelastung, bei hohen Temperaturen standhält, und eine sichere Anbindung (Haftung) der Fluorelastomer-Innenschicht an die Silikonelastomer-Zwischenschicht gewährleistet.

Gelöst wird diese Aufgabe erfindungsgemäß dadurch, dass die Fluorelastomer-Innenschicht (FKM-Innenschicht) sowohl bisphenolisch als auch peroxidisch vemetzt ist.

Überraschenderweise kann durch die gleichzeitige Vernetzung mit zwei verschiedenen Vernetzungsmitteln erreicht werden, dass eine ausreichende Bindung (Haftung) zwischen Fluorelastomer-Innenschicht und Silikonelastomer-Zwischenschicht erreicht wird, ohne dass die dynamische Belastbarkeit Einbußen erleidet, wie es normalerweise bei Verwendung von Peroxid als Vernetzungsmittel der Fall ist.

Fluorelastomere sind vemetzte Fluorkautschuke (FKM), wobei die Fluorkautschuke durch Co- oder Terpolymerisation der folgenden Monomere erhalten werden können: Vinylidenfluorid (VF₂), Hexafluorpropylen (HFP), Tetrafluorethylen (TFE), 1-Hydropentafluorpropylen (HFPE), Perfluor(methylvinylether) (FMVE). Zusätzlich können Monomere mit reaktionsfähigen Gruppen in die Polymerkette eingebaut werden, um die Vernetzung zu erleichtern.

Als peroxidische Vernetzungschemikalien können alle dem Fachmann für die Fluorkautschukvernetzung bekannten organischen Peroxide, z. B. 2,5-Dimethyl, 2,5-di-tbutylperoxyhexan oder Dicumylperoxid, die in der Regel mit geeigneten Coaktivatoren, z. B. Triallylisocyanurat, eingesetzt werden, verwendet werden. Solche Systeme sind z. B. beschrieben in: J. Schnetger, Lexikon der Kautschuk-Technik, Hüthig Buch Verlag, 2. Aufl., Heidelberg, 1991, S. 442-449. Als bisphenolische Vernetzungssysteme kann man ebenfalls sämtliche für die Vernetzung von Fluorkautschuken bekannten Systeme, z. B. mit Bisphenol A oder AF, verwenden, wobei die Systeme üblicherweise aus dem Vernetzungsmittel (Bisphenol), einem Beschleuniger (z. B. Phosphoniumsalz) und einer Base (z. B. Kombination aus Calciumhydroxid und Magnesiumoxid) bestehen. Es sind auch Fluorkautschuke erhältlich, bei denen das bisphenolische Vernetzungssystem mit in den Kautschuk integriert ist.

Gemäß einer vorteilhaften Weiterbildung der Erfindung enthält die Fluorelastomer-Innenschicht zumindest zwei verschiedene vernetzte Fluorkautschuke. Für die unvulkanisierte Mischung wird demnach ein Verschnitt aus zumindest zwei unterschiedlichen Fluorkautschuken eingesetzt. Auf diese Weise können die Eigenschaften der Innenschicht oder deren Ausgangsmischung, z. B. die Verarbeitbarkeit, die Ölbeständigkeit und der Mischungspreis, weiter optimiert werden und es können Fluorkautschuke im Verschnitt verwendet werden, von denen sich einer besser für eine Vernetzung mit Peroxid eignet, während ein anderer sich hervorragend bisphenolisch vernetzen lässt.

Es können für die Innenschicht unterschiedlichste Fluorkautschuktypen im Verschnitt eingesetzt werden. Besonders bevorzugt enthält die Fluorelastomer-Innenschicht jedoch als vernetzte Fluorkautschuke einen Fluorkautschuk A, der einen Fluorgehalt von 65 bis 70 % aufweist und auf Hexafluorpropylen (HFP) und Vinylidenfluorid (VF₂) und gegebenenfalls Tetrafluorethylen (TFE) basiert, und einen Fluorkautschuk B, der einen Fluorgehalt von 65 bis 70 % aufweist und auf Hexafluorpropylen (HFP), Vinylidenfluorid (VF₂), einem fluorhaltigen Monomer mit reaktionsfähiger Gruppe (so genannte Cure-Site-Monomere) und gegebenenfalls Tetrafluorethylen (TFE) basiert. Mit einem solchen Verschnitt für die Innenschicht können die besten Ergebnisse hinsichtlich der Haftung zur Silikonelastomer-Zwischenschicht und der dynamischen Belastbarkeit erzielt werden. Gleichzeitig sind Fluorkautschuke des Typs A preiswert und lassen sich gut verarbeiten, während Fluorkautschuke des Typs B die Vernetzung mit Peroxid durch die Anwesenheit einer reaktionsfähigen Gruppe im Polymer erleichtern. Als bevorzugtes Monomer mit reaktionsfähiger Gruppe wird Bromethylvinylether eingesetzt.
Der hohe Fluorgehalt der Kautschuke gewährleistet eine hohe Ölbeständigkeit.

Das Verhältnis der Fluorkautschuke A und B in der Fluorelastomer-Innenschicht wird vorteilhafterweise zwischen 1:1 bis 5:1 gewählt. Wird der Anteil an Fluorkautschuk A niedriger gewählt, hält der Schlauch dynamischen Belastungen nicht so gut Stand, während bei einem höheren Anteil an Fluorkautschuk A die Anbindung an die Silikonelastomer-Zwischenschicht nicht für alle Anwendungen ausreichend ist. Die besten dynamischen Eigenschaften auch bei höheren Temperaturen und eine besonders gute Haftung zwischen Fluorelastomer-Innenschicht und Silikonelastomer-Zwischenschicht können jedoch mit Verhältnissen von Fluorkautschuk A zu B von 2:1 bis 3:1 erreicht werden. Die Kautschukmischung enthält dann 67 bis 75 phr (parts per hundred parts of rubber by weight) des Fluorkautschukes A und entsprechend 33 bis 25 phr des Fluorkautschukes B.

Die Haftung zwischen Fluorelastomer-Innenschicht und Silikonelastomer-Zwischenschicht kann weiter verbessert werden, indem die Fluorelastomer-Innenschicht 1 bis 10 Gew.-%, vorzugsweise 2 bis 6 Gew.-%, eines Epoxidharzes enthält. Dass die Verwendung von Epoxidharz in Mischungen, die auch bisphenolisch vemetzt werden, nicht mit Nachteilen verbunden ist, ist für den Fachmann überraschend, da es unüblich und u. U. unmöglich ist, Epoxidharze in rein bisphenolisch vernetzten Fluorkautschuken zu verwenden. Epoxidharz und Bisphenol stören sich in Mischungen üblicherweise und führen zu Vulkanisaten mit schlechten Eigenschaften.

Es hat sich als vorteilhaft erwiesen, wenn die auf der Fluorelastomer-Innenschicht aufgebaute peroxidisch vernetzte Silikonelastomer-Schicht mit Hilfe des gleichen Peroxides vernetzt ist wie zumindest ein Teil der Fluorkautschuke in der Fluorelastomer-Innenschicht. Die Haftung der beiden Schichten zueinander kann auf diese Weise nochmals verbessert werden.

Gemäß einer bevorzugten Weiterbildung der Erfindung ist die Elastomer-Außenschicht eine peroxidisch vernetzte Silikonelastomer-Außenschicht. Diese Außenschicht kann sich bei der Vulkanisation optimal mit der die Verstärkungslage zum Teil durchdringenden Silikonelastomer-Zwischenschicht verbinden.

Der erfindungsgemäße Schlauch kann nach herkömmlichen Verfahren, z. B. im Wickelverfahren, hergestellt werden.

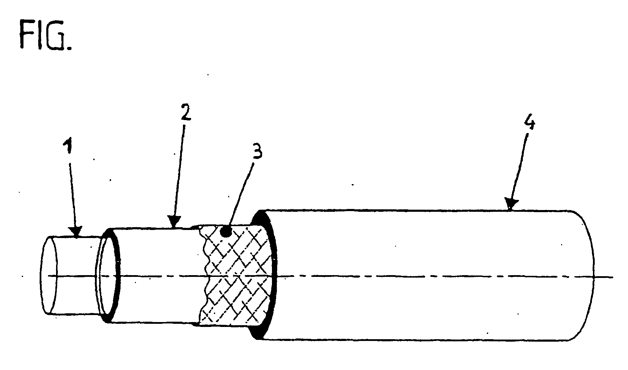

Die Erfindung wird nun anhand der Zeichnung, die ein Ausführungsbeispiel darstellt, näher erläutert. Dabei zeigt die einzige Zeichnungsfigur schematisch einen erfindungsgemäßen Schlauch.

Der Schlauch in der Figur weist eine Fluorelastomer-Innenschicht 1, eine darauf aufgebaute peroxidisch vernetzte Silikonelastomer-Schicht 2, eine gestrickte Verstärkungslage 3 aus einem Meta-Aramidgestrick und eine Silikonelastomer-Außenschicht 4 auf. Der Schlauch kann bevorzugt als Ladeluftschlauch in Turboladermotoren eingesetzt werden, wobei er durch unterschiedliche Befestigungsvorrichtungen, z. B. eine so genannte Henn-Kupplung, mit den Motorteilen verbunden werden kann.

In der Tabelle 1 ist ein Beispiel einer Mischung für die Innenschicht des erfindungsgemäßen Schlauches angegeben.

**Tabelle 1**

| **Mischungsbestandteil** | **Menge in Gew.-%** |
|---|---|
| Fluorkautschuk A mit integriertem Bisphenolvernetzer* | 48,2 |
| Fluorkautschuk B** | 20,6 |
| Ruß N990 | 13,8 |
| Diatomeenerde | 6,9 |
| Calciumhydroxid | 4,1 |
| Magnesiumhydroxid | 2,1 |
| Trimethallylisocyanurat | 0,2 |
| Dicumylperoxid | , 0,7 |
| Epoxidharz | 3,4 |

| | |
|---|---|
| *DAI-EL G704, Daikin Industries, Japan, Polymer aus Hexafluorpropylen (HFP) und Vinylidenfluorid (VF₂), Fluorgehalt: 66% | |
| ** Technoflon P 757, Ausimont, Italien, Polymer aus Hexafluorpropylen (HFP), Vinylidenfluorid (VF₂), Tetrafluorethylen (TFE) und Bromethylvinylether (BVE), Fluorgehalt: 67 % | |

Es wurden drei verschiedene Schläuche hergestellt, die eine Fluorelastomer-Innenschicht, eine darauf aufgebaute peroxidisch vernetzte Silikonelastomer-Schicht, eine gestrickte Verstärkungslage aus einem Meta-Aramidgestrick und eine Silikonelastomer-Außenschicht aufwiesen. Die Fluorelastomerschicht des Schlauches I war rein peroxidisch vernetzt, die des Schlauches II rein bisphenolisch und die Schicht des Schlauches III wies eine Innenschicht mit der erfindungsgemäßen Mischung nach Tabelle 1 auf, wobei in den drei Mischungen für die Innenschichten äquivalente Mengen an Vernetzungssubstanz (I: Peroxid, II: Bisphenol und III: Bisphenol + Peroxid) eingesetzt wurden. In der Tabelle 2 sind die dynamischen Tüchtigkeiten, ermittelt bei 205 °C in einem Druckbereich von 0,1 bis 2,1 bar und bei einer axialen Frequenz von 0,5 Hz, angegeben; es wurde die Anzahl der Zyklen bis zum Defekt des Schlauches bestimmt. Ferner wurden die Trennlasten mit der Streifenprobe gemäß DIN 53530 zur Trennung der Fluorelastomer-Innenschicht und der Silikonelastomer-Zwischenschicht an herausgeschnittenen Schlauchstreifen ermittelt.

**Tabelle 2**

| **Schlauchtyp** | **dynamische Tüchtigkeit** | **Trennlast [N/mm]** |
|---|---|---|
| I (Peroxid) | 30000 - 50000 Zyklen | 2 - 3 |
| II (Bisphenol) | > 1000000 Zyklen | 0,4 - 0,7 |
| III (Peroxid und Bisphenol) | > 1000000 Zyklen | 2 - 3 |

Aus der Tabelle 2 wird ersichtlich, dass überraschenderweise der Schlauch III sowohl die guten Trennwerte einer peroxidischen vernetzten Mischung als auch die dynamische Tüchtigkeit bei hohen Temperaturen einer bisphenolischen vernetzten Mischung in sich vereint, ohne dass Abstriche in diesen beiden Eigenschaften gemacht werden müssen. Der Fachmann würde bei rein additivem Verhalten der beiden Vernetzungsarten Einbußen sowohl in der einen als auch in der anderen Eigenschaft erwarten.

## Patentansprüche

1. Schlauch, insbesondere Ladeluftschlauch, der zumindest eine Fluorelastomer-Innenschicht (FKM-Innenschicht) (1), eine darauf aufgebaute peroxidisch vernetzte Silikonelastomer-Schicht (2), eine Verstärkungslage mit Festigkeitsträgern (3) und eine Elastomer-Außenschicht (4) aufweist,
**dadurch gekennzeichnet, dass**
die Fluorelastomer-Innenschicht (1) sowohl bisphenolisch als auch peroxidisch vernetzt ist.

2. Schlauch nach Anspruch 1, **dadurch gekennzeichnet, dass** die Fluorelastomer-Innenschicht (1) zumindest zwei verschiedene vernetzte Fluorkautschuke enthält.

3. Schlauch nach Anspruch 2, **dadurch gekennzeichnet, dass** die Fluorelastomer-Innenschicht (1) als vemetzte Fluorkautschuke einen Fluorkautschuk A, der einen Fluorgehalt von 65 bis 70 % aufweist und auf Hexafluorpropylen (HFP) und Vinylidenfluorid (VF₂) und gegebenenfalls Tetrafluorethylen (TFE) basiert, und einen Fluorkautschuk B, der einen Fluorgehalt von 65 bis 70 % aufweist und auf Hexafluorpropylen (HFP), Vinylidenfluorid (VF₂), einem fluorhaltigen Monomer mit reaktionsfähiger Gruppe und gegebenenfalls Tetrafluorethylen (TFE) basiert, enthält.

4. Schlauch nach Anspruch 3, **dadurch gekennzeichnet, dass** das fluorhaltige Monomer mit reaktionsfähiger Gruppe Bromethylvinylether (BVE) ist.

5. Schlauch nach Anspruch 3 oder 4, **dadurch gekennzeichnet, dass** die Fluorkautschuke A und B in der Fluorelastomer-Innenschicht (1) in einem Verhältnis von 1:1 1 bis 5: 1 enthalten sind.

6. Schlauch nach Anspruch 5, **dadurch gekennzeichnet, dass** die Fluorkautschuke A und B in der Fluorelastomer-Innenschicht (1) in einem Verhältnis von 2:1 bis 3:1 enthalten sind.

7. Schlauch nach zumindest einem der Ansprüche 1 bis 6, **dadurch gekennzeichnet, dass** die Fluorelastomer-Innenschicht (1) 1 bis 10 Gew.-% eines Epoxidharzes enthält.

8. Schlauch nach Anspruch 7, **dadurch gekennzeichnet, dass** die Fluorelastomer-Innenschicht (1) 2 bis 6 Gew.-% eines Epoxidharzes enthält.

9. Schlauch nach zumindest einem der Ansprüche 1 bis 8, **dadurch gekennzeichnet, dass** die auf der Fluorelastomer-Innenschicht (1) aufgebaute peroxidisch vernetzte Silikonelastomer-Schicht (2) mit Hilfe des gleichen Peroxides vernetzt ist wie zumindest ein Teil der Fluorkautschuke in der Fluorelastomer-Innenschicht (1).

10. Schlauch nach zumindest einem der Ansprüche 1 bis 8, **dadurch gekennzeichnet, dass** die Elastomer-Außenschicht (4) eine peroxidisch vernetzte Silikonelastomer-Außenschicht ist.

## Claims

1. Hose, more especially a supercharger air hose, which has at least one fluoroelastomeric inner layer (FKM inner layer) (1), a peroxidically cross-linked silicone elastomeric layer (2) constructed thereon, a reinforcing ply with reinforcing members (3), and an elastomeric outer layer (4), **characterised in that** the fluoroelastomeric inner layer (1) is cross-linked both bisphenolically and peroxidically.

2. Hose according to claim 1, **characterised in that** the fluoroelastomeric inner layer (1) contains at least two different cross-linked fluorine-containing rubbers.

3. Hose according to claim 2, **characterised in that** the fluoroelastomeric inner layer (1) contains, as cross-linked fluorine-containing rubbers, a fluorine-containing rubber A, which has a fluorine content of 65 to 70 % and is based on hexafluoropropylene (HFP) and vinylidene fluoride (VF₂) and possibly tetrafluoroethylene (TFE), and a fluorine-containing rubber B, which has a fluorine content of 65 to 70 % and is based on hexafluoropropylene (HFP), vinylidene fluoride (VF₂), a fluorine-containing monomer with a reactive group and possibly tetrafluoroethylene (TFE).

4. Hose according to claim 3, **characterised in that** the fluorine-containing monomer with the reactive group is bromoethyl vinyl ether (BVE).

5. Hose according to claim 3 or 4, **characterised in that** the fluorine-containing rubbers A and B in the fluoroelastomeric inner layer (1) are contained in a ratio of 1:1 to 5:1.

6. Hose according to claim 5, **characterised in that** the fluorine-containing rubbers A and B in the fluoroelastomeric inner layer (1) are contained in a ratio of 2:1 to 3:1.

7. Hose according to at least one of claims 1 to 6, **characterised in that** the fluoroelastomeric inner layer (1) contains 1 to 10 % by wt. epoxy resin.

8. Hose according to claim 7, **characterised in that** the fluoroelastomeric inner layer (1) contains 2 to 6 % by wt. epoxy resin.

9. Hose according to at least one of claims 1 to 8, **characterised in that** the peroxidically cross-linked silicone elastomeric layer (2), which is constructed on the fluoroelastomeric inner layer (1), is cross-linked by means of the same peroxide as at least a portion of the fluorine-containing rubbers in the fluoroelastomeric inner layer (1).

10. Hose according to at least one of claims 1 to 8, **characterised in that** the elastomeric outer layer (4) is a peroxidically cross-linked silicone elastomeric outer layer.

## Revendications

1. Tuyau flexible, en particulier tuyau flexible pour air de suralimentation, présentant au moins une couche interne (1) d'élastomère fluoré (couche interne de FKM), une couche (2) d'élastomère de silicone réticulée par les peroxydes formée par dessus, une couche de renforcement (3) comportant des éléments résistants et une couche extérieure (4) d'élastomère, **caractérisé en ce que** la couche interne (1) d'élastomère fluoré est réticulée aussi bien par les bisphénols que par les peroxydes.

2. Tuyau flexible selon la revendication 1, **caractérisé en ce que** la couche interne (1) d'élastomère fluoré contient au moins deux caoutchoucs réticulés différents.

3. Tuyau flexible selon la revendication 2, **caractérisé en ce que** la couche interne (1) d'élastomère fluoré contient, comme caoutchoucs fluorés réticulés, un caoutchouc fluoré A présentant une teneur en fluor comprise entre 65 et 70 % et étant à base d'hexafluoropropylène (HFP), de fluorure de vinylidène (VF₂) et éventuellement de tétrafluoroéthylène (TFE) et un caoutchouc fluoré B présentant une teneur en fluor comprise entre 65 et 70 % et étant à base d'hexafluoropropylène (HFP), de fluorure de vinylidène (VF₂), d'un monomère fluoré comportant un groupe réactif et éventuellement de tétrafluoroéthylène (TFE).

4. Tuyau flexible selon la revendication 3, **caractérisé en ce que** le monomère fluoré comportant un groupe réactif est le bromoéthylvinyléther (BVE).

5. Tuyau flexible selon la revendication 3 ou 4, **caractérisé en ce que** les caoutchoucs fluorés A et B dans la couche interne (1) d'élastomère fluoré sont dans un rapport compris entre 1:1 et 5:1.

6. Tuyau flexible selon la revendication 5, **caractérisé en ce que** les caoutchoucs fluorés A et B dans la couche interne (1) d'élastomère fluoré sont dans un rapport compris entre 2:1 et 3:1.

7. Tuyau flexible selon au moins l'une des revendications 1 à 6, **caractérisé en ce que** la couche interne (1) d'élastomère fluoré contient 1 à 10 % en poids d'une résine époxyde.

8. Tuyau flexible selon la revendication 7, **caractérisé en ce que** la couche interne (1) d'élastomère fluoré contient 2 à 6 % en poids d'une résine époxyde.

9. Tuyau flexible selon au moins l'une des revendications 1 à 8, **caractérisé en ce que** la couche (2) d'élastomère de silicone réticulée par les peroxydes formée sur la couche interne (1) d'élastomère fluoré est réticulée à l'aide du même peroxyde, comme au moins une partie des caoutchoucs fluorés dans la couche interne (1) d'élastomère fluoré.

10. Tuyau flexible selon au moins l'une des revendications 1 à 8, **caractérisé en ce que** la couche extérieure (4) d'élastomère est une couche extérieure d'élastomère. de silicone réticulée par les peroxydes.
